(19)

Europäisches
Patentamt
European
Patent Office
Office européen
des brevets

(11) **EP 2 166 052 A1**

(12) **EUROPEAN PATENT APPLICATION**
published in accordance with Art. 153(4) EPC

(43) Date of publication:
**24.03.2010 Bulletin 2010/12**

(51) Int Cl.:
*C09J 7/00* (2006.01)　　*B60R 13/04* (2006.01)
*C09J 4/02* (2006.01)　　*C09J 133/08* (2006.01)

(21) Application number: **08765593.2**

(22) Date of filing: **13.06.2008**

(86) International application number:
**PCT/JP2008/060883**

(87) International publication number:
**WO 2009/008246 (15.01.2009 Gazette 2009/03)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **06.07.2007　JP 2007178081**

(71) Applicant: **Nitto Denko Corporation
Ibaraki-shi, Osaka 567-8680 (JP)**

(72) Inventors:
• **UESUGI, Masanori
Ibaraki-shi
Osaka 567-8680 (JP)**

• **SHIRAI, Mitsuyoshi
Ibaraki-shi
Osaka 567-8680 (JP)**
• **KONDOU, Takashi
Ibaraki-shi
Osaka 567-8680 (JP)**
• **OKAMOTO, Masayuki
Ibaraki-shi
Osaka 567-8680 (JP)**
• **NIWA, Masahito
Ibaraki-shi
Osaka 567-8680 (JP)**

(74) Representative: **Grünecker, Kinkeldey,
Stockmair & Schwanhäusser
Anwaltssozietät
Leopoldstrasse 4
80802 München (DE)**

(54) **PRESSURE-SENSITIVE ADHESIVE SHEET FOR APPLICATION TO VEHICLE COATING FILM**

(57)　Disclosed is a pressure-sensitive adhesive sheet to be applied to a surface-conditioner-bearing surface of a vehicle coating. The sheet includes an acrylic pressure-sensitive adhesive layer (Y) as a pressure-sensitive adhesive layer to be in contact with the surface of the vehicle coating. The layer (Y) has been polymerized from an acrylic pressure-sensitive adhesive composition through the application of active energy rays, the composition includes a vinyl monomer mainly containing an alkyl (meth)acrylate (a1) whose alkyl moiety having 2 to 14 carbon atoms, or a prepolymer thereof (a); an active-energy-ray-activatable polymerization initiator (b); a multifunctional (meth)acrylate (c); and a (meth)acrylate oligomer (d) having a weight-average molecular weight of 1000 to 30000 and containing 1 to 50 parts by weight of a rosin-modified (meth)acrylate (d1) per 100 parts by weight of total monomer components. The pressure-sensitive adhesive sheet exhibits high bond strengths even to surface-conditioner-bearing surfaces of automotive coatings without being reduced in bond strength by the surface conditioner.

EP 2 166 052 A1

**Description**

Technical Field

The present invention relates to pressure-sensitive adhesive sheets for the application to vehicle coatings such as automotive coatings. Specifically, it relates to pressure-sensitive adhesive sheets that can satisfactorily adhere even to surfaces of hard-to-adhere vehicle coatings which surfaces each contain a surface conditioner.

Background Art

Pressure-sensitive adhesive tapes or sheets (hereinafter such a "tape or sheet" is simply generically referred to as a "sheet") each having a foam substrate have been used for affixing components, such as moldings and plates, to automobiles, as external trims of automobiles or for the protection or decoration of automobile bodies. Exemplary known pressure-sensitive adhesive sheets for the application to vehicle coatings such automotive coatings include pressure-sensitive adhesive sheets using acrylic pressure-sensitive adhesives (see Patent Documents 1 and 2).

The compositions (formulations) of such automotive coatings have been modified in consideration of environmentally friendliness. Specifically, base layers of the automotive coatings have been switched from solvent-based layers to water-based (aqueous) layers, and in association with this, the amounts of surface conditioners (leveling agents) to be contained in the base layers have been increased and/or the types of surface conditioners have been changed (see Patent Documents 3 and 4). Known pressure-sensitive adhesive sheets, however, do not show sufficient bond strengths to the automotive coatings having such modified formulations.

In addition, changes have been made to component materials for automotive paints (coating materials), and this causes additional problems. Specifically, crosslinkable acrylic-melamine paints have been generally used as automotive paints, because they give coatings excellent in toughness and appearance. coatings formed from the crosslinkable acrylic-melamine paints, however, are susceptible to acid rain, because the triazine ring of the melamine resin is hydrolyzed by the action of the acid rain to cause a stain. To avoid this problem caused by acid rain, acrylic paints containing no or smaller amounts of melamine resins have been developed (see Patent Document 5). However, coatings prepared from the acid-rain-resistant paints often show lower surface adhesive properties than that of coatings prepared from known crosslinkable acrylic-melamine paints.

Specifically, there has been obtained no pressure-sensitive adhesive sheet that can develop a sufficient bond strength to the automotive coatings containing relatively large amounts of surface conditioners or to the acid-rain-resistant automotive coatings.

Patent Document 1: Japanese Unexamined Patent Application Publication (JP-A) No. 2001-49200
Patent Document 2: Japanese Unexamined Patent Application Publication (JP-A) No. 2000-248241
Patent Document 3: Japanese Unexamined Patent Application Publication (JP-A) No. 2002-66206
Patent Document 4: Japanese Unexamined Patent Application Publication (JP-A) No. 2003-226834
Patent Document 5: Japanese Unexamined Patent Application Publication (JP-A) No. H06(1994)-108001

Disclosure of Invention

Problems to be Solved by the Invention

The present inventors made investigations and found that the low adhesion is caused by surface conditioners which are added to automotive coatings for the prevention of "crawling or cissing" upon application. More specifically, they found that the surface conditioners bleed out and form a layer with a low cohesive strength on the surface of the resulting coatings, and this layer causes the low adhesion.

Accordingly, an object of the present invention is to provide a pressure-sensitive adhesive sheet that can exhibit a high bond strength even to surfaces of automotive coatings (vehicle coatings) which surfaces contain a surface conditioner, without suffering from reduction in bond strength caused by the surface conditioner. Another object of the present invention is to provide a pressure-sensitive adhesive sheet that exhibits its advantages particularly to acid-rain-resistant coatings among such vehicle coatings. Means for Solving the Problems

After intensive investigations to achieve the objects, the present inventors have found that the above-mentioned problems can be solved by a pressure-sensitive adhesive sheet including a specific pressure-sensitive adhesive layer. This pressure-sensitive adhesive layer is prepared from an acrylic pressure-sensitive adhesive composition through polymerization upon the application of an active energy ray, and the acrylic pressure-sensitive adhesive composition includes a monomer mixture mainly containing a specific alkyl (meth)acrylate, or a prepolymer of the monomer mixture;

a polymerization initiator activatable by the action of an active energy ray; a multifunctional (meth)acrylate; and a specific (meth)acrylate oligomer containing a rosin-modified (meth)acrylate as a monomer component. The present invention has been made based on these findings.

Specifically, in an embodiment, the present invention provides a pressure-sensitive adhesive sheet for the application to a surface of a vehicle coating, which surface contains a surface conditioner. The pressure-sensitive adhesive sheet includes an acrylic pressure-sensitive adhesive layer (Y) as a pressure-sensitive adhesive layer to be in contact with the surface of the vehicle coating, the acrylic pressure-sensitive adhesive layer (Y) has been polymerized from an acrylic pressure-sensitive adhesive composition through the application of an active energy ray, the acrylic pressure-sensitive adhesive composition includes a vinyl monomer mainly containing an alkyl (meth)acrylate (a1) whose alkyl moiety having from 2 to 14 carbon atoms, or a prepolymer of the vinyl monomer (a); a polymerization initiator (b) activatable by the action of an active energy ray; a multifunctional (meth)acrylate (c); and a (meth)acrylate oligomer (d), and the (meth)acrylate oligomer (d) has a weight-average molecular weight of from 1000 to 30000 and contains 1 to 50 parts by weight of a rosin-modified (meth)acrylate (d1) per 100 parts by weight of total monomer components constituting the (meth)acrylate oligomer (d).

The pressure-sensitive adhesive sheet for the application to a vehicle coating may further include a viscoelastic layer (X) containing hollow microspheres.

In the pressure-sensitive adhesive sheet for the application to a vehicle coating, the acrylic pressure-sensitive adhesive composition may contain 0.001 to 5 parts by weight of the polymerization initiator (b) activatable by the action of an active energy ray; 0.001 to 10 parts by weight of the multifunctional (meth)acrylate (c); and 2 to 40 parts by weight of the (meth)acrylate oligomer (d), per 100 parts by weight of the vinyl monomer, or prepolymer thereof (a).

In the pressure-sensitive adhesive sheet for the application to a vehicle coating, the vinyl monomer, or prepolymer thereof (a) may give a polymer having a glass transition temperature (Tg) of from -70°C to -30°C.

In the pressure-sensitive adhesive sheet for the application to a vehicle coating, the (meth)acrylate oligomer (d) may contain a (meth)acrylic ester as an another monomer component (d2) than the rosin-modified (meth)acrylate (d1), which (meth)acrylic ester as the monomer component (d2) gives a homopolymer having a glass transition temperature (Tg) of 40°C or higher.

The (meth)acrylic ester as the additional monomer component (d2) that gives a homopolymer having a glass transition temperature (Tg) of 40°C or higher may be at least one selected from the group consisting of cyclohexyl methacrylate, isobornyl methacrylate, and t-butyl methacrylate.

In the pressure-sensitive adhesive sheet for the application to a vehicle coating, the viscoelastic layer (X) containing hollow microspheres may further contain bubbles. Advantages

The pressure-sensitive adhesive sheets according to embodiments of the present invention have the above configurations and thereby develop high bond strengths even to coatings containing large amounts of surface conditioners which are exposed from the surface. They develop high bond strengths even to hard-to-adhere coatings such as acid-rain-resistant coatings among such coatings. They therefore exhibit superior protective property without suffering from troubles such as unintended peeling of the pressure-sensitive adhesive sheets during use.

Best Modes for Carrying Out the Invention

Pressure-sensitive adhesive sheets according to embodiments of the present invention each include at least one acrylic pressure-sensitive adhesive layer (Y) as a pressure-sensitive adhesive layer (self-adhesive layer) to be in contact with a vehicle coating. The acrylic pressure-sensitive adhesive layer (Y) is prepared from an acrylic pressure-sensitive adhesive composition through polymerization induced by the action of an active energy ray. The acrylic pressure-sensitive adhesive composition essentially contains a vinyl monomer mainly containing an alkyl (meth)acrylate monomer (a1) whose alkyl moiety having from 2 to 14 carbon atoms, or a prepolymer thereof (a) (hereinafter this component is also referred to as "component (a)"); a polymerization initiator (b) activatable by the action of an active energy ray (hereinafter also referred to as a "photopolymerization initiator (b)"); a multifunctional (meth)acrylate (c), and a (meth) acrylate oligomer (d) containing 1 to 50 parts by weight of a rosin-modified (meth)acrylate per 100 parts by weight of total monomer components constituting the (meth)acrylate oligomer (d) and having a weight-average molecular weight of from 1000 to 30000 (hereinafter also referred to as "(meth)acrylate oligomer (d)"). The acrylic pressure-sensitive adhesive composition may further contain one or more additive components, in addition to the above components. As used herein the term "(meth)acrylic" refers to "acrylic and/or methacrylic", and the same goes for the other cases. As used herein the term "pressure-sensitive adhesive composition" also include a "composition for the formation of a pressure-sensitive adhesive".

Also as used herein the term "mainly containing" means that the ingredient in question occupies 60 percent by weight or more (from 60 to 100 percent by weight), and preferably 65 percent by weight or more, of the total weight of the component in question, unless otherwise specified.

The acrylic pressure-sensitive adhesive composition for use herein is polymerizable (curable) by the action of an active energy ray and is preferably polymerizable (curable) by the action of an ultraviolet ray. The acrylic pressure-sensitive adhesive composition, as being curable by the action of an active energy ray, does not need a solvent, is thereby highly environmentally friendly, and, in addition, can readily give a layer having a large thickness. These advantages are more remarkable when the composition is curable by the action of an ultraviolet ray.

The component (a) for use in the acrylic pressure-sensitive adhesive composition is a pressure-sensitive adhesive component mainly playing a function of developing tackiness (adhesive properties) and is a vinyl monomer, or a prepolymer (partial polymer) thereof. The vinyl monomer used as the component (a) mainly contain an alkyl (meth) acrylate (a1) whose alkyl moiety having from 2 to 14 carbon atoms (hereinafter also simply referred to as a "monomer (a1)"). The vinyl monomer may be one monomer (a1) alone; a mixture of two or more monomers (a1); or a mixture of one or more monomers (a1) with one or more other copolymerizable monomers (a2). The component (a) may be a prepolymer prepared through prepolymerization of the vinyl monomer mixture. As used herein a "prepolymer" refers to a partially polymerized product of the vinyl monomer mixture and refers to a polymer having a low conversion and containing a vinyl monomer as monomer components, or a mixture of the polymer with unreacted vinyl monomer.

The alkyl (meth)acrylate (a1) for use as or in the vinyl monomer is an alkyl (meth)acrylate whose alkyl moiety being a linear or branched-chain alkyl group having from 2 to 14 carbon atoms. The alkyl moiety preferably has from 2 to 10 carbon atoms for better adhesive properties. Exemplary alkyl (meth)acrylates (a1) include ethyl (meth)acrylates, n-propyl (meth)acrylates, isopropyl (meth)acrylates, n-butyl (meth)acrylates, sec-butyl (meth)acrylates, t-butyl (meth) acrylates, n-octyl (meth)acrylates, isooctyl (meth)acrylates, 2-ethylhexyl (meth)acrylates, isononyl (meth)acrylates, and dodecyl (meth)acrylates. Among them, 2-ethylhexyl acrylate and butyl acrylate are preferred for better adhesive properties. Each of different alkyl (meth)acrylates (a1) can be used alone or in combination.

Exemplary copolymerizable monomers (a2) for use in the vinyl monomers herein include carboxyl-containing monomers such as acrylic acid, methacrylic acid, carboxyethyl acrylate, carboxypentyl acrylate, itaconic acid, maleic acid, and crotonic acid; hydroxyl-containing monomers such as 2-hydroxyethyl (meth)acrylates, 2-hydroxypropyl (meth) acrylates, 4-hydroxybutyl (meth)acrylates, 6-hydroxyhexyl (meth)acrylates, 8-hydroxyoctyl (meth)acrylates, 10-hydroxydecyl (meth)acrylates, 12-hydroxylauryl (meth)acrylates, and (4-hydroxymethylcyclohexyl)-methyl acrylate; acid anhydride monomers such as maleic anhydride and itaconic anhydride; sulfo-containing monomers such as 2-acrylamido-2-methylpropanesulfonic acid and sulfopropyl acrylate; phosphate-containing monomers such as 2-hydroxyethylacryloyl phosphate; amide monomers including (meth)acrylamides, and N-substituted (meth)acrylamides such as N-methylolacrylamide, N,N-diethylacrylamide, and N,N-dimethylacrylamide; and succinimide monomers such as N-(meth)acryloyloxymethylenesuccinimides, N-(meth)acryloyl-6-oxyhexamethylenesuccinimides, and N-(meth)acryloyl-8-oxyoctamethylenesuccinimides. Exemplary copolymerizable monomers (a2) further include vinyl monomers such as vinyl acetate, N-vinylpyrrolidone, N-vinylcarboxamides, styrene, and N-vinylcaprolactam; cyano acrylate monomers such as acrylonitrile and methacrylonitrile; acrylic ester monomers such as glycidyl (meth)acrylates, tetrahydrofurfuryl (meth)acrylates, polyethylene glycol (meth)acrylates, fluorinated (meth)acrylates, silicone (meth)acrylates, and 2-methoxyethyl acrylate; cycloalkyl (meth)acrylates such as cyclohexyl (meth)acrylates; and methyl (meth)acrylates, octadecyl (meth)acrylates, and other alkyl (meth)acrylates having an alkyl moiety other than the alkyl moiety having from 2 to 14 carbon atoms of the alkyl (meth)acrylates (a1). Each of different copolymerizable monomers (a2) may be used alone or in combination.

Of the copolymerizable monomers (a2), preferred examples are carboxyl-containing monomers and amide monomers, of which acrylic acid, N,N-diethylacrylamide, and N,N-dimethylacrylamide are more preferred typically from the viewpoint of adhesive properties. Independently, N-vinylpyrrolidone is also preferably employed. The use of a basic monomer, such as acrylamide, helps the pressure-sensitive adhesive layer to develop a higher bond strength to acid-rain-resistant coatings which have been prepared through crosslinking such as crosslinking between acid anhydride and epoxy group or crosslinking between hydroxyl group and epoxy group and which contain acidic functional groups such as carboxyl groups and hydroxyl groups.

When the alkyl (meth)acrylate(s) (a1) and copolymerizable monomer(s) (a2) are used in combination, the ratio of the monomer(s) (a1) to the monomer(s) (a2) can be suitably chosen according typically to desired adhesive properties; but the component (a) preferably includes 60 to 99.9 percent by weight of the monomer(s) (a1) and 0.1 to 40 percent by weight of the monomer(s) (a2), more preferably includes 60 to 99 percent by weight of the monomer(s) (a1) and 1 to 40 percent by weight of the monomer(s) (a2), and furthermore preferably includes 65 to 99 percent by weight of the monomer(s) (a1) and 1 to 35 percent by weight of the monomer(s) (a2).

The component (a) for use herein may be a prepolymer (partial polymer) prepared through prepolymerization of the vinyl monomer mixture, typically for the purpose of controlling or modifying the viscosity of the acrylic pressure-sensitive adhesive composition. The partial polymerization (prepolymerization) is generally performed by the application of an active energy ray while avoiding the contact between the vinyl monomer with oxygen. Of active energy rays, an ultraviolet ray is preferably used herein.

The conversion (rate of polymerization) of a prepolymer derived from the vinyl monomer mixture, if used as the component (a), may be from about 2 to about 40 percent by weight, and is preferably from about 5 to about 35 percent by weight, though these ranges are not critical and may vary depending typically on the molecular weight of a polymer contained therein. The conversion of a prepolymer herein is determined in the following manner. Initially, about 0.5 gram of the prepolymer is accurately weighed, this is dried at 130°C for 2 hours, and the weight of the dried article is accurately weighed, from which a weight loss [weight of volatile contents (weight of unreacted monomers)] is determined, and these data are substituted into the following equation to calculate the conversion:

$$\text{Conversion (\%) of prepolymer} = [1-(\text{Weight loss})/(\text{Weight of prepolymer before drying})] \times 100$$

The component (a), when formed into a polymer, has a glass transition temperature (Tg) of preferably from -70°C to -30°C, and more preferably from -60°C to -30°C, from the viewpoint of adhesive properties. As used herein the "glass transition temperature (Tg)" of a polymer formed from the component (a) refers to a "glass transition temperature (theoretical) of a polymer formed from the component (a) alone as a monomer component" represented by the following equation:

$$1/Tg = W_1/Tg_1 + W_2/Tg_2 + ... + W_n/Tg_n$$

In the equation, Tg represents the glass transition temperature (in units of kelvin (K)) of a polymer formed by the component (a); $Tg_i$ represents the glass transition temperature (in units of K) of a homopolymer formed by a monomer "i"; and $W_i$ represents the weight fraction of the monomer "i" in the component (a), where i = 1, 2, ..., n. The above equation is an equation to be used in calculation in the cases where the component (a) includes monomers of "n" types, i.e., monomer 1, monomer 2, ..., and monomer "n".

Exemplary polymerization initiators (b) activatable by the action of an active energy ray (photopolymerization initiators) for use in the acrylic pressure-sensitive adhesive composition include, but are not limited to, benzoin ethers such as benzoin methyl ether, benzoin propyl ether, and 2,2-dimethoxy-1,2-diphenylethan-1-one; substituted benzoin ethers such as anisole methyl ether; substituted acetophenones such as 2,2-diethoxyacetophenone, 2,2-dimethoxy-2-phenylacetophenone, and 1-hydroxy-cyclohexyl phenyl ketone; substituted $\alpha$-ketols such as 2-methyl-2-hydroxypropiophenone; aromatic sulfonyl chlorides such as 2-naphthalenesulfonyl chloride; and photoactive oximes such as 1-phenyl-1,1-prapanedione-2-(o-ethoxycarbonyl)-oxime.

The amount of the photopolymerization initiators (b) is preferably from 0.001 to 5 parts by weight, and more preferably from 0.05 to 3 parts by weight, per 100 parts by weight of the component (a).

The multifunctional (meth)acrylate (c) for use in the acrylic pressure-sensitive adhesive composition can be chosen from among compounds each having at least two (meth)acryloyl groups. The multifunctional (meth)acrylate plays the function of imparting an adequate gel fraction to the pressure-sensitive adhesive. Examples of the multifunctional (meth)acrylate (c) include, but are not limited to, trimethylolpropane tri(meth)acrylates, pentaerythritol tetra(meth)acrylates, 1,2-ethylene glycol di(meth)acrylates, 1,6-hexanediol di(meth)acrylates, and 1,12-dodecanediol di(meth)acrylates. Each of different multifunctional (meth)acrylates (c) may be used alone or in combination.

The amount of the multifunctional (meth)acrylates (c) is preferably from 0.001 to 10 parts by weight, and more preferably from 0.005 to 5 parts by weight, per 100 parts by weight of the component (a), though these ranges may vary depending on the molecular weight and number of functional groups of the multifunctional (meth)acrylate (c).

The (meth)acrylate oligomer (d) for use in the acrylic pressure-sensitive adhesive composition includes one or more rosin-modified (meth)acrylates (d1) and one or more other monomer components (d2).

The rosin-modified (meth)acrylate (d1) may be obtained by modifying a functional-group-containing (meth)acrylate with a rosin; by reacting a modified rosin with a (meth)acrylate; or by further modifying a rosin-modified (meth)acrylate with a compound such as a (meth)acrylate. Exemplary rosin-modified (meth)acrylates include reaction products prepared through the reaction between carboxyl group typically of a rosin, polymerized rosin, or hydrogenated rosin with epoxy group typically of glycidyl (meth)acrylate.

The rosin-modified (meth)acrylate (d1) can also be commercially available products, of which preferred examples are products supplied under the trade names "Beam Set 101" and "Beam Set 102" by Arakawa Chemical Industries, Ltd.

The other monomer component (d2) than the rosin-modified (meth)acrylate (d1) is preferably chosen from (meth)acrylic esters. Among them, those having a relatively high glass transition temperature (Tg) as a homopolymer are preferred from the viewpoint of thermal stability. Specifically, those having a glass transition temperature (Tg) as a homopolymer of 40°C or higher are preferred, and those having a glass transition temperature (Tg) as a homopolymer of from 50°C to 200°C are more preferred. Preferred examples of such monomer components (d2) include cyclohexyl methacrylate (Tg: 66°C), isobornyl methacrylate (Tg: 94°C), and t-butyl methacrylate (Tg: 107°C), of which cyclohexyl methacrylate is especially preferred. Such a monomer component (d2) having a high glass transition temperature (Tg) helps the (meth)acrylate oligomer (d) to form a firm adhesive interface on the adherend coating to thereby help the pressure-sensitive adhesive to develop a higher bond strength. A monomer component (d2) having a low glass transition temperature (Tg) may cause the (meth)acrylate oligomer (d) to form a relatively soft adhesive interface layer on the coating and may not so satisfactorily help the pressure-sensitive adhesive to develop a higher bond strength.

The monomer content of the rosin-modified (meth)acrylate (d1) in the (meth)acrylate oligomer (d) may be 1 to 50 parts by weight, is more preferably from 2 to 40 parts by weight, and furthermore preferably from 5 to 30 parts by weight, per 100 parts by weight of total monomer components constituting the (meth)acrylate oligomer (d). The rosin-modified (meth)acrylate (d1), if present in a monomer content of less than 1 part by weight, may not satisfactorily help the acrylic pressure-sensitive adhesive layer (Y) to develop sufficient adhesive properties. In contrast, the rosin-modified (meth)acrylate (d1), if present in a monomer content of more than 50 parts by weight, may cause the oligomer (d) to be not so miscible in the acrylic pressure-sensitive adhesive layer, and this may adversely affect the appearance and adhesive properties of the pressure-sensitive adhesive sheet. As used herein a "monomer content" refers to a proportion (compounding ratio) of a monomer component charged during the production of the (meth)acrylate oligomer (d). The same goes for the other monomer contents and monomer amounts.

The weight-average molecular weight of the (meth)acrylate oligomer (d) is from 1000 to 30000, and preferably from 2000 to 10000. A (meth)acrylate oligomer (d), if having a weight-average molecular weight of less than 1000, may not effectively help the acrylic pressure-sensitive adhesive layer to develop a higher bond strength to vehicle coatings. In contrast, a (meth)acrylate oligomer (d), if having a weight-average molecular weight of more than 30000, may often suffer from phase separation in the pressure-sensitive adhesive composition, and this may often adversely affect the adhesive performance and appearance of the pressure-sensitive adhesive sheet. The weight-average molecular weight is measured in terms of polystyrene through gel permeation chromatography (GPC). Specifically, the measurement may be performed with tetrahydrofuran as a solvent at a flow rate of 0.5 ml per minute using a system under the trade name "HPLC 8020" (supplied by Tosoh Corporation) and two "TSK-gel GMH-H (20)" (trade name; supplied by Tosoh Corporation) columns.

The amount of the (meth)acrylate oligomer (d) is preferably from 2 to 40 parts by weight, and more preferably from 4 to 30 parts by weight, per 100 parts by weight of the component (a). The (meth)acrylate oligomer (d), if used in an amount of less than 2 parts by weight, may not so effectively help the acrylic pressure-sensitive adhesive layer to exhibit higher adhesive properties. In contrast, the (meth)acrylate oligomer (d), if used in an amount of more than 40 parts by weight, may often suffer from phase separation, and this may adversely affect the adhesive performance (tack performance) and appearance of the pressure-sensitive adhesive sheet.

The acrylic pressure-sensitive adhesive composition for use herein may further include one or more additives within ranges not adversely affecting the advantages of the present invention, in addition to the components (a) to (d). Examples of such additives include colorants such as pigments; fillers such as calcium oxide, magnesium oxide, silica, zinc oxide, and titanium oxide; crosslinking agents such as isocyanate crosslinking agents, epoxy crosslinking agents, urea crosslinking agents, melamine crosslinking agents, carboxylic acid or acid anhydride crosslinking agents, and metallic compound crosslinking agents; flame retardants; age inhibitors; antistatic agents; softeners such as process oils and petroleum softeners; antioxidants; plasticizers; surfactants; and blowing agents such as heat-expandable microspheres.

The amounts of additives can be set suitably according typically to desired properties such as desired bond strength. Typically, the amounts of crosslinking agents may be from about 1 to about 5 parts by weight, per 100 parts by weight of the base polymer of the acrylic pressure-sensitive adhesive.

The use of a small amount of the specific (meth)acrylate oligomer (d) in combination with the acrylic pressure-sensitive adhesive component helps the pressure-sensitive adhesive sheet to develop a high bond strength even to hard-to-adhere coatings. This further prevents the pressure-sensitive adhesive from varying in adhesive properties by the action of surface conditioners contained in the coatings (e.g., from varying in adhesive properties due to bleeding of the surface conditioners) and enables the pressure-sensitive adhesive to exhibit adhesive performance stably.

Though details remain unknown, the above operation and advantages may develop probably according to the following mechanism. The specific (meth)acrylate oligomer (d), when incorporated in an acrylic pressure-sensitive adhesive, moves within the resulting pressure-sensitive adhesive layer and disperses in such a specific state that it is enriched in the vicinity of the surface (in the surface layer) of the pressure-sensitive adhesive layer. After the sheet is applied to a coating, the (meth)acrylate oligomer (d) is enriched in the vicinity of an interface between the coating and the pressure-sensitive adhesive layer. Such a low-molecular-weight component is enriched in a surface layer in because of the entropy. As described above, a surface conditioner (leveling agent) component and/or a low-molecular-weight component generally bleeds out from the surface layer of a coating. When the coating is affixed to a pressure-sensitive adhesive layer containing an acrylic polymer but no (meth)acrylate oligomer, the bled component forms a weakly cohesive layer at the interface between the coating and pressure-sensitive adhesive layer to thereby reduce the adhesive strength therebeween. However, according to the present invention, the pressure-sensitive adhesive layer can exhibit a high bond strength even to such a hard-to-adhere coating. This is probably because the (meth)acrylate oligomer (d) is enriched in the surface layer of the pressure-sensitive adhesive layer, and the (meth)acrylic oligomer attracts the bled component and thereby helps the pressure-sensitive adhesive layer to adsorb the bled component therein, and this prevents the formation of a layer of the bled component at the interface. The (meth)acrylic oligomer used herein exhibits the attracting activity probably because low molecular weight components and leveling agent components contained in such coatings are generally acrylic oligomers, and the (meth)acrylic oligomer is highly compatible or miscible with these acrylic oligomers and interacts with them.

Additionally, the (meth)acrylate oligomer (d) contains a rosin component and thereby exhibits an activity as a tackifier resin. A rosin resin, if present by itself, may not sufficiently exhibit its advantages, because it has a low molecular weight and may migrate typically into the viscoelastic layer (X) mentioned below. The single use of the rosin resin may also inhibit polymerization upon the application of an active energy ray. In contrast, according to the present invention, the rosin component is prevented from migrating into another layer by previously incorporating the rosin component through polymerization into a polymer (oligomer) constituting the pressure-sensitive adhesive layer. Additionally, the polymerization of the acrylic pressure-sensitive adhesive composition is protected from inhibition, because the incorporation (polymerization) of the rosin component into the (meth)acrylate oligomer (d) is carried out prior to the polymerization of the acrylic pressure-sensitive adhesive composition and the rosin composition loses deactivation points which causes the polymerization inhibition. Further, the incorporation of the rosin component into the (meth)acrylate oligomer (d) helps the pressure-sensitive adhesive layer to adsorb the bled component more effectively.

The acrylic pressure-sensitive adhesive composition is polymerized (cured) by the application of an active energy ray (of which an ultraviolet ray is preferred) to give an acrylic pressure-sensitive adhesive layer (Y) (hereinafter also simply referred to as a "pressure-sensitive adhesive layer (Y)") for use in the pressure-sensitive adhesive sheets. The acrylic pressure-sensitive adhesive layer (Y) is preferably formed typically by a process of applying the acrylic pressure-sensitive adhesive composition to a suitable carrier such as a release film or substrate, to give a layer of acrylic pressure-sensitive adhesive composition, and curing the layer with an active energy ray. Of such active energy rays, ultraviolet rays are preferably employed. This process may further include the step of drying according to necessity. Since such photopolymerization is inhibited by oxygen present typically in the air, the curing with an active energy ray (photo-curing) is preferably carried out in the absence of oxygen. To this end, for example, photo-curing may be carried out after protecting the layer of acrylic pressure-sensitive adhesive composition typically with a release film affixed thereon or photo-curing may be carried out in a nitrogen atmosphere.

Exemplary active energy rays include ionizing radiations such as alpha rays, beta rays, gamma rays, neutron beams, and electron beams; and ultraviolet rays. Among them, ultraviolet rays are preferably employed. The radiation dose and application duration of active energy ray are not particularly limited, as long as the photopolymerization initiator is activated to cause reactions of monomer components. Typically, the application of an active energy ray may be carried out by applying an ultraviolet ray at a radiation dose of from about 400 to about 4000 mJ/cm$^2$, which ultraviolet ray gives an irradiance of from 1 to 200 mW/cm$^2$ at a wavelength of from 300 to 400 nm.

The application of an active energy ray to the acrylic pressure-sensitive adhesive composition to form a pressure-sensitive adhesive layer (Y) is preferably performed so that the resulting pressure-sensitive adhesive layer (Y) has a conversion of 90 percent by weight or more. Residual unreacted monomers can be removed through a common drying process. The conversion of the pressure-sensitive adhesive layer (Y) can be determined in the same way as in the conversion of the prepolymer.

Though not critical, the thickness of the pressure-sensitive adhesive layer (Y) is preferably 10 μm or more, more preferably 20 μm or more, and furthermore preferably 30 μm or more, from the viewpoint of keeping satisfactory bond strength. Though not critical, the upper limit of the thickness of the acrylic pressure-sensitive adhesive layer (Y) is generally about 400 μm,

The pressure-sensitive adhesive layer (Y) is used in the pressure-sensitive adhesive sheet as a pressure-sensitive adhesive layer (adhesive face) to be in contact with a surface of a vehicle coating, in which the surface contains a surface conditioner.

Though not limited, exemplary layer structures of the pressure-sensitive adhesive sheets according to embodiments of the present invention include (1) a "substrate-less" (transfer) pressure-sensitive adhesive sheet including a pressure-sensitive adhesive layer (Y) alone; and a pressure-sensitive adhesive sheet including a substrate, and arranged on or above at least one side thereof, a pressure-sensitive adhesive layer (Y). The pressure-sensitive adhesive sheets may be double-faced pressure-sensitive adhesive sheets each having adhesive faces as both sides thereof; or single-faced pressure-sensitive adhesive sheets each having an adhesive face as only one side thereof. Among them, preferred are double-faced pressure-sensitive adhesive sheets each having adhesive faces as both sides thereof. When the pressure-sensitive adhesive sheets have pressure-sensitive adhesive layers arranged on both sides of a substrate, it is enough that at least one of the two layers (the layer to be in contact with a vehicle coating) be the pressure-sensitive adhesive layer (Y), and the other layer may be a known or common pressure-sensitive adhesive layer.

When the pressure-sensitive adhesive sheet has a substrate, exemplary substrates include carriers or substrates including films of plastics such as polyolefins (e.g., polypropylenes) and polyesters (e.g., poly(ethylene terephthalate)s); porous films typically having gas permeability; viscoelastic layers containing hollow microspheres (hereinafter such a layer is also referred to as a "viscoelastic layer (X)"); papers; fabrics; nonwoven fabrics; and metallic foils. Among them, the viscoelastic layer (X) containing hollow microspheres is preferably employed as a substrate. In an embodiment, a pressure-sensitive adhesive sheet includes the viscoelastic layer (X) arranged on or above the pressure-sensitive adhesive layer (Y) on a side not to be in contact with the surface of the vehicle coating. This pressure-sensitive adhesive sheet shows higher adhesive properties to adherends and shows higher adhesive properties especially to adherends (vehicle coatings) having an uneven surface. Each of different substrates may be used alone or in combination. An example of the latter case is a substrate that includes a laminate of a plastic film and the viscoelastic layer (X).

The pressure-sensitive adhesive sheet especially preferably has a layer structure of (layer (Y))/(layer (X))/(layer (Y)).

Each of the pressure-sensitive adhesive layer (Y) and substrate, such as the viscoelastic layer (X), may have a single layer structure or multilayer structure. The pressure-sensitive adhesive layer (Y) may be arranged on or above the substrate such as the viscoelastic layer (X) directly, or indirectly with the interposition of an intermediate layer such as an adhesive layer. The pressure-sensitive adhesive sheet may further include one or more other layers such as undercoat layers, within ranges not adversely affecting the advantages of the present invention. The pressure-sensitive adhesive sheets may have a release film (separator) on their adhesive face so as to protect the adhesive face before use.

The viscoelastic layer (X) includes at least hollow microspheres and a base polymer forming a viscoelastic body.

The base polymer for use in the viscoelastic layer (X) herein is not especially limited and can be suitably selected from among known base polymers. Exemplary usable base polymers include acrylic polymers, rubber polymers, vinyl alkyl ether polymers, silicone polymers, polyester polymers, polyamide polymers, urethane polymers, fluorocarbon polymers, and epoxy polymers. Of these base polymers, acrylic polymers are preferably used herein for better adhesive properties. Each of different base polymers may be used alone or in combination.

The acrylic polymers are polymers each containing, as a main monomer component, an alkyl (meth)acrylate having a linear or branched-chain alkyl group. Exemplary alkyl (meth)acrylates for use as a main monomer component in the acrylic polymers include alkyl (meth)acrylates whose alkyl moiety having from 1 to 20 carbon atoms, such as methyl (meth)acrylates, ethyl (meth)acrylates, n-propyl (meth)acrylates, isopropyl (meth)acrylates, n-butyl (meth)acrylates, isobutyl (meth)acrylates, sec-butyl (meth)acrylates, t-butyl (meth)acrylates, pentyl (meth)acrylates, isopentyl (meth)acrylates, hexyl (meth)acrylates, heptyl (meth)acrylates, n-octyl (meth)acrylates, isooctyl (meth)acrylates, 2-ethylhexyl (meth)acrylates, nonyl (meth)acrylates, isononyl (meth)acrylates, decyl (meth)acrylates, isodecyl (meth)acrylates, undecyl (meth)acrylates, dodecyl (meth)acrylates, tridecyl (meth)acrylates, tetradecyl (meth)acrylates, pentadecyl (meth)acrylates, hexadecyl (meth)acrylates, heptadecyl (meth)acrylates, octadecyl (meth)acrylates, nonadecyl (meth)acrylates, and eicosyl (meth)acrylates. Among them, alkyl (meth)acrylate whose alkyl moiety having from 2 to 14 carbon atoms are preferred, and alkyl (meth)acrylates whose alkyl moiety having from 2 to 10 carbon atoms are more preferred. Each of different alkyl (meth)acrylates may be used alone or in combination.

The acrylic polymers can further contain, as monomer components, one or more other (meth)acrylates than the alkyl (meth)acrylates having linear or branched-chain alkyl groups. Exemplary other (meth)acrylates include cycloalkyl (meth)acrylates each containing an alicyclic alkyl group, such as cyclopentyl (meth)acrylates, cyclohexyl (meth)acrylates, and isobornyl (meth)acrylates.

The content of alkyl (meth)acrylates having a linear or branched-chain alkyl group, which work as main monomer components in the acrylic polymer, is preferably 60 percent by weight or more, and more preferably 65 percent by weight or more, based on the total amount of monomer components constituting the acrylic polymer.

The acrylic polymer may further contain, as monomer components, various copolymerizable monomers such as polar-group-containing monomers and multifunctional monomers. Use of copolymerizable monomers as monomer components helps the viscoelastic layer (X) to be improved in properties such as elasticity and flexibility. Each of different copolymerizable monomers may be used alone or in combination.

Exemplary polar-group-containing monomers include carboxyl-containing monomers such as (meth)acrylic acids, carboxyethyl (meth)acrylates, carboxypentyl (meth)acrylates, itaconic acid, maleic acid, fumaric acid, crotonic acid, and isocrotonic acid, and anhydrides thereof, such as maleic anhydride; hydroxyl-containing monomers such as 2-hydroxyethyl (meth)acrylates, 3-hydroxypropyl (meth)acrylates, 4-hydroxybutyl (meth)acrylates, 6-hydroxyhexyl (meth)acrylates, 8-hydroxyoctyl (meth)acrylates, 10-hydroxydecyl (meth)acrylates, 12-hydroxylauryl (meth)acrylates, and (4-hydroxymethylcyclohexyl)-methyl acrylate; sulfo-containing monomers such as 2-acrylamido-2-methylpropanesulfonic acid, sulfopropyl acrylate, and sodium vinylsulfonate; and phosphate-containing monomers such as 2-hydroxyethylacryloyl phosphate. Exemplary polar-group-containing monomers further include amido-containing monomers such as (meth)acrylamides, N,N-dimethyl(meth)acrylamides, N-methylol(meth)acrylamides, N-methoxymethyl (meth)acrylamides, and N-butoxymethyl(meth)acrylamides; amino-containing monomers such as aminoethyl (meth)acrylates, dimethylaminoethyl (meth)acrylates, and t-butylaminoethyl (meth)acrylates; glycidyl-containing monomers such as glycidyl (meth)acrylates and methylglycidyl (meth)acrylates; cyano acrylate monomers such as acrylonitrile and methacrylonitrile; heterocycle-containing vinyl monomers such as N-vinyl-2-pyrrolidone and (meth)acryloylmorpholines, as well as N-vinylpyridine, N-vinylpiperidone, N-vinylpyrimidine, N-vinylpiperazine, N-vinylpyrazine, N-vinylpyrrole, N-vinylimidazole, and N-vinyloxazole; alkoxyalkyl (meth)acrylate monomers such as methoxyethyl (meth)acrylates and ethoxyethyl (meth)acrylates; imido-containing monomers such as cyclohexylmaleimide and isopropylmaleimide; and isocyanate-containing monomers such as 2-methacryloyloxyethyl isocyanate. Of such polar-group-containing monomers, carboxyl-containing monomers such as acrylic acid and methacrylic acid, and anhydrides of them are preferred. Each of different polar-group-containing monomers can be used alone or in combination.

The amount of polar-group-containing monomers is preferably from 3 to 40 percent by weight, more preferably from 5 to 40 percent by weight, and furthermore preferably from 5 to 35 percent by weight, of the total amount of monomer components constituting the acrylic polymer. Polar-group-containing monomers, if used in an amount of more than 40 percent by weight, may typically adversely affect the flexibility of the viscoelastic layer (X) and may cause the pressure-sensitive adhesive sheet to have insufficient adhesive properties to adherends (vehicle coatings) having an uneven surface. In contrast, if the amount of polar-group-containing monomers is less than 3 percent by weight, the viscoelastic layer (X) may show an insufficient cohesive strength, and the resulting pressure-sensitive adhesive sheet may have insufficient holding performance (capability of maintaining adhesiveness to the adherend against an external force) or may not be worked satisfactorily upon working such as cutting or punching.

Examples of the multifunctional monomers include hexanediol di(meth)acrylates, butanediol di(meth)acrylates, (poly)ethylene glycol di(meth)acrylates, (poly)propylene glycol di(meth)acrylates, neopentyl glycol di(meth)acrylates, pentaerythritol di(meth)acrylates, pentaerythritol tri(meth)acrylates, dipentaerythritol hexa(meth)acrylates, trimethylolpropane tri(meth)acrylates, tetramethylolmethane tri(meth)acrylates, allyl (meth)acrylates, vinyl (meth)acrylates, divinylbenzene, epoxy acrylates, polyester acrylates, and urethane acrylates.

The amount of multifunctional monomers is preferably 10 percent by weight or less (for example, from 0.001 to 10 percent by weight), and more preferably from 0.005 to 5 percent by weight, of the total amount of monomer components constituting the acrylic polymer, while such ranges may vary depending on the molecular weights and the numbers of functional groups. Multifunctional monomers, if used in an amount of more than 10 percent by weight, may typically adversely affect the flexibility of the viscoelastic layer (X) and may cause the pressure-sensitive adhesive sheet to have insufficient adhesive properties to adherends (vehicle coatings) having an uneven surface. In contrast, if the amount of multifunctional monomers is less than 0.001 percent by weight, the viscoelastic layer (X) may show an insufficient cohesive strength, and the resulting pressure-sensitive adhesive sheet may have insufficient holding performance or may not be worked satisfactorily upon working such as cutting or punching.

In addition to the polar-group-containing monomers and multifunctional monomers, exemplary copolymerizable monomers further include vinyl esters such as vinyl acetate and vinyl propionate; aromatic vinyl compounds such as styrene and vinyltoluene; olefins or dienes, such as ethylene, butadiene, isoprene, and isobutylene; vinyl ethers such as vinyl alkyl ethers; and vinyl chloride.

The base polymer (of which an acrylic polymer is preferred) of the viscoelastic layer (X) may be prepared according to a known polymerization process such as solution polymerization, emulsion polymerization, or bulk polymerization (mass polymerization), but it is preferably prepared according to a polymerization process using a polymerization initiator through curing by the action of heat or an active energy ray. By using a curing reaction by the action of heat or an active energy ray, a viscoelastic layer (X) can be formed by curing the material resin composition under such a condition that the hollow microspheres are still contained in the composition. The resulting viscoelastic layer (X) therefore uniformly and stably contains hollow microspheres. As used herein a "resin composition" also means and include a "composition for the formation of resin".

The polymerization initiator is not especially limited in its type and can for example be any of thermal polymerization initiators and photopolymerization initiators. Of such initiators, photopolymerization initiators (photoinitiators) are preferably used so that the polymerization can be performed within a short time. Each of different polymerization initiators can be used alone or in combination.

A resin composition for the formation of the viscoelastic layer (X), when containing a photopolymerization initiator, enables simultaneous formation of the viscoelastic layer (X) and the pressure-sensitive adhesive layer (Y) during the preparation of the acrylic pressure-sensitive adhesive sheet. This is because the viscoelastic layer (X) in this case and the pressure-sensitive adhesive layer (Y) are both curable by the application of an active energy ray.

The photopolymerization initiator is not especially limited and can be, for example, any of the photopolymerization initiators listed as the photopolymerization initiator (b). Though not critical, the amount of the photopolymerization initiator is, for example, preferably from 0.01 to 5 parts by weight, and more preferably 0.05 to 3 parts by weight, per 100 parts by weight of total monomer components constituting the resin composition for the formation of the viscoelastic layer (X).

It is important to apply an active energy ray for activating the photopolymerization initiator. Exemplary active energy rays include ionizing radiations such as alpha rays, beta rays, gamma rays, neutron beams, and electron beams; and ultraviolet rays. Among them, ultraviolet rays are preferably employed. The radiation dose and application duration of active energy ray are not particularly limited, as long as the photopolymerization initiator is activated to cause reactions of monomer components.

Examples of thermal polymerization initiators, if used in the resin composition for the formation of the viscoelastic layer (X), include azo thermal polymerization initiators such as 2,2'-azobisisobutyronitrile, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine) dihydrochloride; peroxide thermal polymerization initiators such as dibenzoyl peroxide and tert-butyl permaleate; and redox thermal polymerization initiators.

The viscoelastic layer (X) contains hollow microspheres. Each of different types of hollow microspheres may be used alone or in combination.

Of such hollow microspheres, hollow inorganic or organic microspheres are preferably used. Specifically, exemplary hollow inorganic microspheres include hollow balloons made from glass, such as hollow glass balloons; hollow balloons made from metallic compounds, such as hollow alumina balloons; and hollow balloons made from ceramics, such as hollow ceramic balloons. Exemplary hollow organic microspheres include hollow balloons made from resins, such as hollow acrylic balloons and hollow poly(vinylidene chloride) balloons.

Exemplary commercially available hollow glass balloons include a product supplied under the trade name "Glass Microballoon" by Fuji Silysia Chemical Ltd.; products supplied under the trade names "CEL-STAR Z-25", "CEL-STAR Z-27", "CEL-STAR CZ-31T", "CEL-STAR Z-36", "CEL-STAR Z-39", "CEL-STAR T-36", "CEL-STAR SX-39", and "CEL-STAR PZ-6000" by Tokai Kogyo Co., Ltd.; and a product supplied under the trade name "Silax Fine Balloon" by Fine Balloon Limited.

Though not critical, the particle size (average particle diameter) of the hollow microspheres can be chosen within a range of typically from 1 to 500 $\mu$m, preferably from 5 to 200 $\mu$m, and furthermore preferably from 10 to 100 $\mu$m.

The specific gravity of the hollow microspheres can be chosen within ranges typically of from 0.1 to 0.8 g/cm$^3$, and preferably from 0.12 to 0.5 g/cm$^3$, though not critical. Hollow microspheres, if having a specific gravity less than 0.1 g/cm$^3$ and mixed into a composition for the formation of the viscoelastic layer (X), may be difficult to uniformly disperse in the composition, because such lightweight hollow microspheres tend to float upon the composition. In contrast, hollow microspheres, if having a specific gravity of more than 0.8 g/cm$^3$, may be expensive so as to increase the production cost.

Though not critical, the amount of the hollow microspheres is preferably from 5 to 50 percent by volume, more preferably from 10 to 50 percent by volume, and furthermore preferably from 15 to 40 percent by volume, based on the total volume of the viscoelastic layer (X). Hollow microspheres, if used in an amount of less than 5 percent by volume, may not sufficiently exhibit their advantages. In contrast, hollow microspheres, if used in an amount of more than 50 percent by volume, may adversely affect the pressure-sensitive adhesive sheet to have an insufficient adhesive strength.

The viscoelastic layer (X) may further contain bubbles (foams) in addition to the hollow microspheres, for better cushioning properties and adhesiveness.

The possible amount of bubbles, when to be contained in the viscoelastic layer (X), can be chosen within ranges not adversely affecting properties such as adhesion properties (adhesive properties of the pressure-sensitive adhesive sheet) but is preferably from 5 to 50 percent by volume, more preferably from 10 to 40 percent by volume, and furthermore preferably from 12 to 30 percent by volume, based on the total volume of the viscoelastic layer (X). Bubbles, if present in an amount of less than 5 percent by volume, may not sufficiently contribute to stress relaxation, and the resulting pressure-sensitive adhesive sheet may often show insufficient resistance to resilience (adhesion against repulsive force). In contrast, bubbles, if present in an amount of more than 50 percent by volume, may cause open cells penetrating through the viscoelastic layer (X), and this may adversely affect the adhesiveness of the viscoelastic layer (X) to the acrylic pressure-sensitive adhesive layer (Y); or the viscoelastic layer (X) may become too soft to provide sufficient shear strength.

Bubbles contained in the viscoelastic layer (X) are basically preferably closed cells, but they may be a mixture of closed cells and semi-closed cells. Such bubbles or cells generally have spherical shapes, but they may have deformed or irregular spherical shapes. The average cell size (diameter) of bubbles is not particularly limited and can be selected within ranges of typically from 1 to 1000 $\mu$m, preferably from 10 to 500 $\mu$m, and more preferably from 30 to 300 $\mu$m.

A gas component contained in the bubbles (gaseous component for constituting bubbles) is not especially limited and can be any of gaseous components including inert gases such as nitrogen, carbon dioxide, and argon gases; and air. When a reaction such as polymerization reaction is conducted after adding a gaseous component for constituting bubbles into the composition, it is important that the gaseous component should be one not adversely affecting the polymerization reaction. Of such gaseous components, nitrogen gas is preferred, because it does not adversely affect such reactions and is available inexpensively.

The viscoelastic layer (X) may further contain one or more fluorine-containing surfactants, in addition to the base polymer and hollow microspheres. Of such fluorine-containing surfactants, preferred are those having both an

oxy-($C_2$-$C_3$) alkylene group and a fluorinated hydrocarbon group in the molecule. Such fluorine-containing surfactants having an oxy-($C_2$-$C_3$) alkylene group, if used, help to reduce blocking (adhesion) and frictional drag between the hollow microspheres and polymer in the viscoelastic layer (X) so that the viscoelastic layer (X) can satisfactorily disperse stress. This improves the adhesive properties of the pressure-sensitive adhesive sheet. In addition to the above advantages, the presence of the fluorinated hydrocarbon group helps the bubbles, when incorporated, to be incorporated more satisfactorily and more stably.

Of the fluorine-containing surfactants, preferred are, but not limited to, nonionic surfactants, because such nonionic surfactants can be dispersed more satisfactorily in the base polymer. Each of different fluorine-containing surfactants may be used alone or in combination.

The oxy-($C_2$-$C_3$) alkylene group is represented by the formula: -R-O-, wherein R represents a linear or branched-chain alkylene group having 2 or 3 carbon atoms. The oxy-($C_2$-$C_3$) alkylene group may exist in any form such as an alcohol in which the terminal oxygen is bonded to hydrogen atom; an ether in which the terminal oxygen is bonded to another hydrocarbon group; and an ester in which the terminal oxygen is bonded via carbonyl group to another hydrocarbon group. The oxy-($C_2$-$C_3$) alkylene structure may also exist as part of a cyclic structure such as a cyclic ether or lactone. Specific examples of the oxy-($C_2$-$C_3$) alkylene group include oxyethylene group ($-CH_2CH_2O-$) and oxypropylene group [$-CH_2CH(CH_3)O-$]. The fluorine-containing surfactant may contain one or more types of such oxy-($C_2$-$C_3$) alkylene groups per molecule.

The fluorinated hydrocarbon group is preferably, but is not limited to, a perfluoro group. The perfluoro group may be monovalent or multivalent (bivalent or higher). The fluorinated hydrocarbon group may have a double bond and/or triple bond and may have any of linear, branched, and cyclic structures. The fluorinated hydrocarbon group is not particularly limited in number of carbon atoms and may have one or more carbon atoms, preferably from 3 to 30 carbon atoms, and more preferably from 4 to 20 carbon atoms. The fluorine-containing surfactant may contain one or more types of fluorinated hydrocarbon groups per molecule.

Though not especially limited, copolymers each containing, as monomer components, both a monomer having an oxy-($C_2$-$C_3$) alkylene group and a monomer having a fluorinated hydrocarbon group are preferred as fluorine-containing surfactants. Preferred examples of such copolymers include block copolymers and graft copolymers.

Examples of the block copolymers (copolymers each having an oxy-($C_2$-$C_3$) alkylene group and a fluorinated hydrocarbon group in their principal chains) include polyoxyethylene perfluoroalkyl ethers, perfluoroalkylated polyoxyethylenes, polyoxypropylene perfluoroalkyl ethers, polyoxyisopropylene perfluoroalkyl ethers, perfluoroalkylated polyoxyethylene sorbitans, perfluoroalkylated polyoxyethylene-polyoxypropylene block copolymers, and perfluoroalkylated polyoxyethylene glycols.

Of graft copolymers (copolymers having an oxy-($C_2$-$C_3$) alkylene group and a fluorinated hydrocarbon group in their side chains), preferred are copolymers containing, as monomer components, at least a vinyl compound having a polyoxyalkylene group with a vinyl compound having a fluorinated hydrocarbon group, of which acrylic copolymers are more preferred. Exemplary vinyl compounds each having a polyoxyalkylene group include polyoxyalkylene (meth)acrylates such as polyoxyethylene (meth)acrylates, polyoxypropylene (meth)acrylates, and polyoxyethylene-polyoxypropylene (meth)acrylates. Exemplary vinyl compounds each having a fluorinated hydrocarbon group include (meth)acrylic esters having a fluorinated hydrocarbon, including perfluoroalkyl (meth)acrylates such as perfluorobutyl (meth)acrylates, perfluoroisobutyl (meth)acrylates, and perfluoropentyl (meth)acrylates.

The fluorine-containing surfactant may further contain one or more other structures, such as an alicyclic hydrocarbon group and an aromatic hydrocarbon group, in addition to the above structures. It may also contain a variety of functional groups such as carboxyl group, sulfonic group, cyano group, amido group, and amino group, within ranges not impeding dispersion in the base polymer. Typically, a fluorine-containing surfactant, if being a vinyl copolymer, may further contain, as monomer components, one or more monomer components copolymerizable with the vinyl compound having a polyoxyalkylene group and the vinyl compound having a fluorinated hydrocarbon group. Each of different copolymerizable monomers may be used alone or in combination.

Preferred examples of the copolymerizable monomer components include alkyl (meth)acrylates whose alkyl moiety having from 1 to 20 carbon atoms, such as undecyl (meth)acrylates and dodecyl (meth)acrylates; (meth)acrylic esters each having an alicyclic hydrocarbon group, such as cyclopentyl (meth)acrylates; and (meth)acrylic esters each having an aromatic hydrocarbon group, such as phenyl (meth)acrylates. Exemplary copolymerizable monomer components further include carboxyl-containing monomers such as maleic acid and crotonic acid; sulfo-containing monomers such as sodium vinylsulfonate; aromatic vinyl compounds such as styrene and vinyltoluene; olefins or dienes, such as ethylene and butadiene; vinyl ethers such as vinyl alkyl ethers; amido-containing monomers such as acrylamide; amino-containing monomers such as (meth)acryloylmorpholines; glycidyl-containing monomers such as methylglycidyl (meth)acrylates; and isocyanate-containing monomers such as 2-methacryloyloxyethyl isocyanate. Usable copolymerizable monomer components further include multifunctional copolymerizable monomers (multifunctional monomers) such as dipentaerythritol hexa(meth)acrylates and divinylbenzene.

Though not critical in molecular weight, the fluorine-containing surfactant is preferably one having a weight-average molecular weight of less than 20000 (e.g., 500 or more and less than 20000) for highly effectively reducing blocking and frictional drag between the base polymer and hollow microspheres. To contain bubbles more satisfactorily and more stably therein, the viscoelastic layer (X) more preferably further contains a fluorine-containing surfactant having a weight-average molecular weight of 20000 or more in combination with the fluorine-containing surfactant having a weight-average molecular weight of less than 20000. The weight-average molecular weight of the former fluorine-containing surfactant is, for example, from 20000 to 100000, preferably from 22000 to 80000, and more preferably from 24000 to 60000.

Examples of the fluorine-containing surfactants (fluorine-containing surfactants each having an oxy-($C_2$-$C_3$) alkylene group and a fluorinated hydrocarbon group) having a weight-average molecular weight of less than 20000 include products supplied under the trade names "FTERGENT 251" and "FTX-218" by NEOS Co., Ltd.; products supplied under the trade names "Megafac F-477" and "Megafac F-470" by Dainippon Ink and Chemicals, Inc.; and products supplied under the trade names "Surflon S-381", "Surflon S-383", "Surflon S-393", "Surflon KH-20", and "Surflon KH-40" by AGC Seimi Chemical Co., Ltd. Preferred examples of the fluorine-containing surfactants (fluorine-containing surfactants each having an oxy-($C_2$-$C_3$) alkylene group and a fluorinated hydrocarbon group) having a weight-average molecular weight of 20000 or more include products supplied under the trade names "EFTOP EF-352" and "EFTOP EF-801" by JEMCO Inc.; and a product supplied under the trade name "Unidyne TG-656" by Daikin Industries, Ltd.

Though not critical, the amount (in terms of solids content) of fluorine-containing surfactants can be chosen within ranges of typically from 0.01 to 5 parts by weight, preferably from 0.02 to 3 parts by weight, and more preferably from 0.03 to 1 part by weight, per 100 parts by weight of total monomer components constituting the base polymer in the resin composition for the formation of the viscoelastic layer (X), especialy per 100 parts by weight of total monomer components for constituting the acrylic polymer mainly containing an alkyl (meth)acrylate as a monomer component. Fluorine-containing surfactants, if used in an amount of less than 0.01 part, may not sufficiently exhibit their activities on the adhesive performance (adhesive properties of the pressure-sensitive adhesive sheet). Fluorine-containing surfactants, if used in an amount of more than 5 parts by weight, may adversely affect the adhesive performance of the sheet.

The resin composition for the formation of the viscoelastic layer (X) may further contain suitable additives, in addition to the above components such as fluorine-containing surfactants, base polymers, hollow microspheres, and polymerization initiators. Examples of such suitable additives to be incorporated in the composition include crosslinking agents such as polyisocyanate crosslinking agents, silicone crosslinking agents, epoxy crosslinking agents, and alkyl-etherified melamine crosslinking agents; tackifiers including tackifiers which are made from materials such as rosin derivative resins, polyterpene resins, petroleum resins, and oil-soluble phenolic resins and which are solid, semisolid, or liquid at ordinary temperature (room temperature); plasticizers; fillers; age inhibitors; and colorants such as pigments and dyestuffs. Typically, the viscoelastic layer (X), when formed by using a photopolymerization initiator, may be colored by using pigments (coloring pigments), as long as not inhibiting photopolymerization. When the viscoelastic layer (X) is to be colored black, carbon black, for example, may be used as the coloring pigment. The amount of the carbon black is preferably 0.15 part by weight or less (for example from 0.001 to 0.15 part by weight), and more preferably from 0.02 to 0.1 part by weight, per 100 parts by weight of total monomer components constituting the base polymer in the resin composition for the formation of the viscoelastic layer (X). When the base polymer is an acrylic polymer, the amount is per 100 parts by weight of total monomer components such as an alkyl (meth)acrylate. The above-specified range is preferred for providing a suitable degree of coloring and for not inhibiting the photopolymerization reaction.

The resin composition for the formation of the viscoelastic layer (X) can be prepared by mixing components such as monomer components (e.g., alkyl (meth)acrylates) for constituting the base polymer, polymerization initiators, and additives according to a known technique. In the preparation, monomer components may be partially polymerized according to necessity, typically for the control of viscosity. Specifically, the resin composition may be prepared, for example, according to the following procedure.

(i) Initially, monomer components, such as alkyl (meth)acrylates and other copolymerizable monomers, are mixed with a polymerization initiator such as photopolymerization initiator to give a monomer mixture.
(ii) The monomer mixture is subjected to a polymerization reaction according to the type of the polymerization initiator (e.g., polymerization by the application of an ultraviolet ray) to give a composition (syrup) in which only part of the monomer components have been polymerized. Next,
(iii) the resulting syrup is mixed with hollow microspheres and, according to necessity, fluorine-containing surfactants and other additives to give a blend. (iv) Bubbles, if to be incorporated into the viscoelastic layer (X), are introduced to and mixed with the blend prepared from the step (iii). In this manner, the resin composition for the formation of the viscoelastic layer (X) can be obtained. However, the way to prepare the resin composition for the formation of the viscoelastic layer (X) is not limited to the above procedure. For example, the fluorine-containing surfactants and/or hollow microspheres may be incorporated into the monomer mixture prior to the preparation of the syrup.

Bubbles, if to be contained in the viscoelastic layer (X), are preferably incorporated as a last component into the resin composition for the formation of the viscoelastic layer (X) as in the above-mentioned preparation procedure. This helps the bubbles to be stably incorporated and stably present in the viscoelastic layer (X). A blend (precursor composition) before incorporation of bubbles (e.g., the blend prepared from the step (iii)) preferably has a higher viscosity, so as to hold the mixed bubbles stably. Though not critical, the viscosity of the blend before incorporation of bubbles is, for example, preferably from 5 to 50 Pa·s, and more preferably from 10 to 40 Pa·s, as measured at a temperature of 30°C using a BH type viscometer with a No. 5 rotor at a number of revolutions of 10 rpm. The blend, if having a viscosity of less than 5 Pa·s, may not satisfactorily hold bubbles, because incorporated bubbles may immediately coalesce to escape out of the system. In contrast, the blend, if having an excessively high viscosity of more than 50 Pa's, may be difficult to give a satisfactory viscoelastic layer (X) through coating. The viscosity can be controlled, for example, by incorporating polymer components such as acrylic rubbers and thickening additives; and/or by partially polymerizing monomer components for constituting the base polymer.

The way to incorporate bubbles in the preparation of the resin composition for the formation of the viscoelastic layer (X) is not especially limited and may be any known process for mixing such bubbles into compositions. An exemplary device for use herein is one that includes a stator and a rotor, in which the stator includes a disc having a through hole at the center part and having a multiplicity of fine teeth thereon, and the rotor faces the stator and includes a disc having a multiplicity of fine teeth thereon. Using this device, the blend to which bubbles are to be contained is introduced in between the teeth of the stator and the teeth of the rotor, and a gaseous component for constituting bubbles (bubble-constituting gas) is introduced via the through hole into the blend while rotating the rotor at high speed, to thereby give a resin composition containing finely divided and dispersed bubble-constituting gas.

To suppress or prevent coalescence of bubbles, it is desirable to carry out the steps from the incorporation of bubbles to the formation of the viscoelastic layer (X) continuously as a series of steps. Specifically, it is desirable that a resin composition for the formation of the viscoelastic layer (X) is prepared while incorporating bubbles thereinto in the above way, and the resin composition is immediately subjected to the formation of the viscoelastic layer (X).

The viscoelastic layer (X) may be formed according to any procedure not specifically limited. Typically, it may be formed by applying the resin composition for the formation of the viscoelastic layer to a suitable carrier such as release liner or substrate to form a layer of the resin composition, and curing (e.g., thermal curing or curing through the application of an active energy ray) and/or drying the layer according to necessity. Among such procedures, curing through the application of an active energy ray is preferably employed, as mentioned above.

Tough not critical, the thickness of the viscoelastic layer (X) may be chosen within ranges of, for example, from 200 to 5000 $\mu$m, preferably from 300 to 4000 $\mu$m, and more preferably from 400 to 3000 $\mu$m. The viscoelastic layer (X), if having a thickness of less than 200 $\mu$m, may not sufficiently help the pressure-sensitive adhesive sheet to exhibit satisfactory cushioning properties and to show sufficient adhesive properties to curved faces and uneven faces. In contrast, the viscoelastic layer (X), if having a thickness of more than 5000 $\mu$m, may be difficult to have a uniform thickness and thereby be difficult to give a sheet having a uniform thickness. The viscoelastic layer (X) may have a single-layer structure or multilayer structure.

Another pressure-sensitive adhesive layer than the pressure-sensitive adhesive layer (Y), if included in the pressure-sensitive adhesive sheet, can be prepared by using one or more known pressure-sensitive adhesives according to a known process for the formation of pressure-sensitive adhesive layers. Exemplary pressure-sensitive adhesives herein include acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine-containing pressure-sensitive adhesives, and epoxy pressure-sensitive adhesives. The thickness of the pressure-sensitive adhesive layer other than the pressure-sensitive adhesive layer (Y) is not especially limited and can be suitably set according typically to the intended use and method of use.

The pressure-sensitive adhesive sheets may be wound into rolls or may be stacked as sheets. Specifically, the pressure-sensitive adhesive sheets may each be in the form typically of a sheet or tape. The adhesive face of the pressure-sensitive adhesive sheet, if wound as a roll, may be protected by a release film (separator) or by a releasably treated layer (treated backing layer) arranged on a carrier (base) on the opposite side to the adhesive face. Exemplary release agents (parting agents) for the formation of the releasably treated layer (treated backing layer) on the carrier include silicone release agents and long-chain alkyl release agents.

As mentioned above, release films (separators) may be used for the protection of adhesive faces of the pressure-sensitive adhesive sheet. Such release films (separators) are used in the production of the pressure-sensitive adhesive sheet or used as a protector typically for adhesive face of the produced acrylic pressure-sensitive adhesive sheet before use. The release film is not necessarily used in the production of the pressure-sensitive adhesive sheet but is preferably used so as to cover the surface of sheet to thereby prevent the sheet from contact with oxygen, because oxygen present typically in the air may adversely affect the photopolymerization reaction. The release film is generally removed when the pressure-sensitive adhesive sheet is used.

Though not especially limited as long as being able to block oxygen and to permeate rays (light), examples of the release film include bases having a releasably treated surface treated with a release agent (parting agent) at least on one side thereof; as well as bases showing low adhesiveness and containing fluorocarbon polymers (such as polytetrafluoroethylenes, polychlorotrifluoroethylenes, poly(vinyl fluoride)s, poly(vinylidene fluoride)s, tetrafluoroethylene/hexafluoropropylene copolymers, and chlorofluoroethylene/vinylidene fluoride copolymers)); and bases showing low adhesiveness and containing nonpolar polymers (including olefinic resins such as polyethylenes and polypropylenes). Such a low-adhesion base can use its both sides as release surfaces. In contrast, a base having one or two releasably treated surfaces can use the releasably treated surface(s) as release surface(s).

In the bases which have a releasably treated surface on at least one side thereof and are used as release films, exemplary bases include plastic base films and paper bases. Exemplary plastic bases (synthetic resin films) include polyester films such as poly(ethylene terephthalate) films; olefinic resin films such as polyethylene films and polypropylene films; poly(vinyl chloride) films; polyimide films; polyamide films such as nylon films; and rayon films. Exemplary paper bases include bases made of papers such as woodfree papers, Japanese papers, kraft papers, glassine papers, synthetic papers, and topcoat papers. Among these bases, polyester films such as poly(ethylene terephthalate) films are preferably used.

Though not especially limited, exemplary release agents (parting agents) usable herein include silicone release agents, fluorine release agents, and long-chain alkyl release agents. Each of different release agents may be used alone or in combination. The release film may be prepared, for example, according to a known or common procedure.

The thickness of release film is not particularly limited, as long as being able to block oxygen and to permeate rays (light). The release film can have a single-layer structure or multilayer structure.

Pressure-sensitive adhesive sheets according to embodiments of the present invention are to be applied to the outside of vehicle coatings. As used herein the term "vehicle coating(s)" refer to coating(s) applied to the external trims (exterior) of vehicles, such as the exteriors of bodies of automobiles and motorcycles and of railway vehicles and further include coating(s) applied to exterior components typically of automobiles, motorcycles, and railway vehicles. Among such vehicle coatings, the pressure-sensitive adhesive sheets are preferably applied to automotive coatings typically of automotive bodies. The shapes of the adherend vehicle coatings are not specifically limited, and examples thereof include planar (two-dimensional) shapes and three-dimensionally curved shapes. The pressure-sensitive adhesive sheets are usable typically in the application to automotive coatings so as to protect the coatings or to decorate the coatings. They are also usable in bonding of articles to the automotive coatings through them. Examples of the articles include automotive exterior components, automotive protecting components, and automotive decorating components, and more specific examples thereof include moldings, plates, sliding roofs (sunroofs), and pillar garnishes.

The vehicle coatings represented by automotive coatings contain one or more surface conditioners. Advantages according to the present invention are not exhibited when applied to coatings containing no surface conditioner. Such automotive coatings generally have a structure typically of [electro-deposited (anchor) coating]/[intercoatingl/[base topcoating]/[clear topcoating]. Coatings for use herein contain one or more surface conditioners in at least one of the intercoating, base topcoating, and clear topcoating. Among such vehicle coatings, the pressure-sensitive adhesive sheets more remarkably exhibit their advantages when applied to vehicle coatings each including a water-based intercoating and/or a water-based base topcoating. This is because such water-based intercoatings and base topcoatings should contain large amounts of surface conditioners to allow a clear topcoating to be coated satisfactorily thereon, and such large amounts of surface conditioners are liable to bleed out from the surfaces of the coatings.

Examples of the clear topcoating as automotive coating include, but are not limited to, coatings such as polyester-melamine, alkyd-melamine, acrylic-melamine, acrylic-urethane, and acrylic-polyacidic curing agent coatings. Among them, the pressure-sensitive adhesive sheets more remarkably exhibit their advantages when applied to acrylic coatings cured by polyacidic curing agents.

In a preferred embodiment, the pressure-sensitive adhesive sheets are advantageously applied to coatings having a low melamine content or containing no melamine. In a more preferred embodiment, the pressure-sensitive adhesive sheets are applied to coatings having a ratio [melamine/ester peak ratio (intensity ratio (peak ratio) of melamine to ester)] of 0.4 or less (e.g., from 0 to 0.4), preferably 0.3 or less (e.g., from 0 to 0.3), and more preferably 0.2 or less (e.g., from 0 to 0.2). The melamine/ester peak ratio is the ratio of a peak derived from melamine stretching vibration at around 814 $cm^{-1}$ (melamine peak; melamine absorption intensity; melamine intensity) to a peak derived from ester stretching vibration at around 1730 $cm^{-1}$ (ester peak; ester absorption intensity; ester intensity). These peak intensities are determined through attenuated total reflectance measurement (ATR) using Fourier transform infrared spectroscopy (FT-IR). In this connection, acrylic-melamine coatings have large melamine/ester peak ratios, because they have undergone crosslinking with melamine. In contrast, acid-rain-resistant coatings have small melamine/ester peak ratios, because they have not undergone crosslinking with melamine.

Specifically, the ratio of melamine intensity to ester intensity herein is determined in the following manner. In an IR chart determined according to attenuated total reflectance measurement (ATR) using Fourier transform infrared spectroscopy (FT-IR), the height of a peak at around 1730 $cm^{-1}$ from the base line to the peak top is defined as the intensity of an ester-derived peak (ester intensity). Independently, the height of a peak at around 814 $cm^{-1}$ from the base

line to the peak top is defined as the intensity of a melamine-derived peak (melamine intensity). The intensity ratio of melamine to ester is determined from the measured melamine intensity and ester intensity according to the following equation:

$$\text{(Intensity ratio of melamine to ester)} = \text{(Melamine intensity)/(Ester intensity)}$$

As used herein a "surface conditioner" refers to an additive that regulates or controls surface defects of coatings, typified by one used for the purpose of defoaming or of leveling. Exemplary surface conditioners include, but are not especially limited to, acrylic, vinyl, silicone, and fluorine surface conditioners. Among them, suitable herein are surface conditioners which are acrylic oligomers having a number-average molecular weight of from 4000 to 30000, and more preferably from 4000 to 20000. More specifically, surface conditioners more suitable herein are acrylic oligomers (homo-oligomers or co-oligomers) including at least one selected from the group consisting of 2-ethylhexyl acrylate, butyl acrylate, and ethyl acrylate as a monomer component. Exemplary commercial products of such surface conditioners include the DISPARLON LF-1900 Series (supplied by Kusumoto Chemicals, Ltd.) and the POLYFLOW Series (supplied by Kyoeisha Chemical Co., Ltd.).
Though not critical, the content of surface conditioners in the entire vehicle coating (automotive coating) is preferably from 0.01 to 5 percent by weight, and more preferably from 0.02 to 3 percent by weight. When applied to a vehicle coating having a content of surface conditioners of less than 0.01 percent by weight, the pressure-sensitive adhesive sheets may not so effectively exhibit their advantages.

EXAMPLES

The present invention will be illustrated in further detail with reference to several examples below. It should be noted, however, these examples are never construed to limit the scope of the present invention. All percentages ad parts hereinafter are by weight.

[Preparation of Prepolymer (UV Syrup) A1 From Vinyl Monomers]

A monomer mixture containing 90 parts by weight of 2-ethylhexyl acrylate and 10 parts by weight of acrylic acid as monomer components was mixed with 0.05 part by weight of "Irgacure 651" (trade name; supplied by Ciba Specialty Chemicals Corporation) and 0.05 part by weight of "Irgacure 184" (trade name; supplied by Ciba Specialty Chemicals Corporation) as photopolymerization initiators, and the resulting mixture was irradiated with an ultraviolet ray to a viscosity of about 15 Pa·s to give a partially polymerized prepolymer (UV syrup) A1. The viscosity was measured at a temperature of 30°C using a BH type viscometer with a No. 5 rotor at a number of revolutions of 10 rpm.

[Preparation of Prepolymer (UV Syrup) A2 From Vinyl Monomers]

A monomer mixture containing 70 parts by weight of 2-ethylhexyl acrylate and 30 parts by weight of diethylacrylamide as monomer components was mixed with 0.05 part by weight of "Irgacure 651" (trade name; supplied by Ciba Specialty Chemicals Corporation) and 0.05 part by weight of "Irgacure 184" (trade name; supplied by Ciba Specialty Chemicals Corporation) as photopolymerization initiators, and the resulting mixture was irradiated with an ultraviolet ray to a viscosity of about 15 Pa·s to give a partially polymerized prepolymer (UV syrup) A2. The viscosity was measured at a temperature of 30°C using a BH type viscometer with a No. 5 rotor at a number of revolutions of 10 rpm.

[Preparation of (Meth)acrylate Oligomer D1]

In a four-neck flask were placed 100 parts by weight of toluene, 90 parts by weight of cyclohexyl methacrylate, 10 parts by weight of a rosin-modified acrylate (supplied by Arakawa Chemical Industries, Ltd. under the trade name "Beam Set 101"), 0.2 part by weight of 2,2'-azobisisobutyronitrile and 3 parts by weight of 2-mercaptoethanol, followed by a reaction in a nitrogen atmosphere at 70°C for 2 hours and at 80°C for further 1 hour.
The reaction mixture was thereafter placed in methanol to precipitate an oligomer, the precipitated oligomer was recovered from methanol, dried in a vacuum dryer, and thereby yielded a (meth)acrylate oligomer D1. The (meth)acrylate oligomer D1 had a weight-average molecular weight of 5000.

# EP 2 166 052 A1

[Preparation of (Meth)acrylate Oligomer D2]

A (meth)acrylate oligomer D2 was prepared in the same manner as with the (meth)acrylate oligomer D1, except for using another rosin-modified acrylate supplied by Arakawa Chemical Industries, Ltd. under the trade name "Beam Set 102". The (meth)acrylate oligomer D2 had a weight-average molecular weight of 8000.

[Preparation of (Meth)acrylate Oligomer D3]

In a four-neck flask were placed 100 parts by weight of toluene, 100 parts by weight of cyclohexyl methacrylate, 0.2 part by weight of 2,2'-azobisisobutyronitrile, and 3 parts by weight of 2-mercaptoethanol, followed by a reaction in a nitrogen atmosphere at 70°C for 2 hours and at 80°C for further 1 hour.
The reaction mixture was thereafter placed in methanol to precipitate an oligomer, the precipitated oligomer was recovered from methanol, dried in a vacuum dryer, and thereby yielded a (meth)acrylate oligomer D3. The (meth)acrylate oligomer D3 had a weight-average molecular weight of 4000.

[Preparation of Bubble-Containing Viscoelastic Layer]

The above-prepared UV syrup A1 (100 parts by weight; the whole quantity) was mixed with 0.1 part by weight of 1,6-hexanediol diacrylate. Next, hollow glass balloons (supplied under the trade name "CEL-STAR Z-27" by Tokai Kogyo Co., Ltd.) were added thereto in an amount of 30 percent by volume relative to the total volume of the syrup A1. In addition, 1 part by weight of a fluorine-containing surfactant (trade name "Surflon S-393" supplied by AGC Seimi Chemical Co., Ltd.) was added to give a viscoelastic composition. The "Surflon S-393" is an acrylic copolymer containing polyoxyethylene groups and fluorinated hydrocarbon groups in side chains and having a weight-average molecular weight Mw of 8300.
Nitrogen bubbles were then incorporated into the viscoelastic composition by introducing nitrogen using a device. This device includes a stator and a rotor, in which the stator includes a disc having a through hole at the center part and having a multiplicity of fine teeth thereon, and the rotor faces the stator and includes a disc having a multiplicity of fine teeth thereon. The bubbles were introduced into the viscoelastic composition to an amount of about 15 percent by volume of the total volume of the discharged composition (of the total volume of a bubble-containing viscoelastic composition) to give the bubble-containing viscoelastic composition.
The above-prepared bubble-containing viscoelastic composition was introduced via a tube 19 mm in diameter and about 1.5 m in length into a roll coater and applied through the roll coater to a releasably treated surface of a poly(ethylene terephthalate) (PET) base film, which film had the releasably treated surface on only one side thereof; and another ply of the single-faced releasably treated PET film was then overlaid on a layer of the composition. Thus, the layer of the bubble-containing viscoelastic composition having a thickness after drying and curing of 1.0 mm was formed between two releasably treated surfaces of the two PET films. Specifically, the resulting article included the two poly(ethylene terephthalate) base films and, arranged therebetween, the layer of the bubble-containing viscoelastic composition.
Next, an ultraviolet ray at an illuminance of about 4 mW/cm$^2$ was applied to both sides of the article for 180 seconds to cure the bubble-containing viscoelastic composition and thereby yielded a bubble-containing viscoelastic layer.

EXAMPLE 1

An acrylic pressure-sensitive adhesive composition was prepared by adding 5 parts by weight of the (meth) acrylate oligomer D1 and 0.08 part by weight of hexanediol diacrylate to 100 parts by weight of the UV syrup A1 and homogeneously mixing them.
The acrylic pressure-sensitive adhesive composition was applied to a poly(ethylene terephthalate) film 38 μm thick (supplied by Toray Industries, Inc. under the trade name "Lumirror S-10") to give a coat layer having a final thickness (thickness of the pressure-sensitive adhesive) of 60 μm.
Next, to block oxygen, the coat layer was covered by a poly(ethylene terephthalate) film (release film) 38 μm thick, in which one side of the film had been treated with a silicone to be releasable, and the film was arranged so that the treated surface faced the coat layer.
Next, an ultraviolet ray was applied to the upper surface (release film surface) of the resulting sheet at an irradiance of 4 mW/cm$^2$ for 180 seconds using a black-light lamp (supplied by Toshiba Corporation under the trade name "TOSHIBA FL15BLB"). The irradiance was measured with the UV Checker "UVR-T1" supplied by Topcon Corporation, having an optimum sensitivity of about 350 nm. The sheet was further subjected to a heat treatment in a drying oven at 130°C for 3 minutes to evaporate residual monomers to form a pressure-sensitive adhesive layer, and thereby yielded a pressure-sensitive adhesive sheet.

EXAMPLE 2

An acrylic pressure-sensitive adhesive composition was prepared, and a pressure-sensitive adhesive sheet was prepared using the composition by the procedure of Example 1, except for using the (meth)acrylate oligomer D2 instead of the (meth)acrylate oligomer D1.

EXAMPLE 3

An acrylic pressure-sensitive adhesive composition was prepared, and a pressure-sensitive adhesive sheet was prepared using the composition by the procedure of Example 1, except for using the UV syrup A2 instead of the UV syrup A1.

EXAMPLE 4

An acrylic pressure-sensitive adhesive composition was prepared, and a pressure-sensitive adhesive sheet was prepared using the composition by the procedure of Example 2, except for using the UV syrup A2 instead of the UV syrup A1.

EXAMPLE 5

The acrylic pressure-sensitive adhesive composition as in Example 1 was applied onto a poly(ethylene tereph-thalate) film 38 $\mu$m thick to give a coat layer having a final thickness of 60 $\mu$m, in which one side of the polyester film (PET film) had been treated with a silicone to be releasable, and the polyester film was arranged so that the treated surface faced the coat layer. Next, the application of an ultraviolet ray and heat treatment were performed by the procedure of Example 1 to form a pressure-sensitive adhesive layer.
One of the two polyester films was then removed to expose a pressure-sensitive adhesive layer, the exposed pressure-sensitive adhesive layer was affixed to the above-prepared bubble-containing viscoelastic layer, and thereby yielded a pressure-sensitive adhesive sheet.

COMPARATIVE EXAMPLE 1

An acrylic pressure-sensitive adhesive composition was prepared, and a pressure-sensitive adhesive sheet was prepared using the composition by the procedure of Example 1, except for using (meth)acrylate oligomer D3 instead of the (meth)acrylate oligomer D1.

COMPARATIVE EXAMPLE 2

An acrylic pressure-sensitive adhesive composition was prepared, and a pressure-sensitive adhesive sheet was prepared using the composition by the procedure of Example 1, except for not using the (meth)acrylate oligomer D1.

COMPARATIVE EXAMPLE 3

A pressure-sensitive adhesive sheet was prepared by the procedure of Example 5, except for using the acrylic pressure-sensitive adhesive composition prepared in Comparative Example 2 as the acrylic pressure-sensitive adhesive composition.

[Testing]

(1) Adherends (Automotive Coatings)

The following automotive coating (I) and automotive coating (II) were used as adherends in testing of the pressure-sensitive adhesive sheets prepared according to the examples and comparative examples.
Automotive coating (I) (acid-rain-resistant coating): This had been prepared by sequentially applying an electrodeposition paint, an intermediate paint, and a metallic paint to a steel sheet, and thereafter applying an acid-rain-resistant clear coating to a thickness of 50 $\mu$m, in which the acid-rain-resistant clear coating was an acrylic/styrenic coating containing a silicone surface conditioner and not undergoing melamine-crosslinking.
Automotive coating (II) (acrylic-melamine coating): This had been prepared by sequentially applying an electrodeposition paint, an intermediate paint, and a metallic paint to a steel sheet, and thereafter applying a clear coating to a thickness

of 50 μm, in which the clear coating was an acrylic/styrenic coating containing a silicone surface conditioner and being crosslinked with a melamine.

The intensity ratios of the melamine peak to the ester peak of the automotive coating (I) and automotive coating (II) determined through infrared (IR) measurements are shown in Table 1 below.

[Table 1]

(TABLE 1)

|  | Intensity ratio (melamine/ester) |
|---|---|
| Automotive coating (I) | 0.03 |
| Automotive coating (II) | 0.56 |

The intensity ratios were determined in the following manner.

The surface of a sample automotive coating was washed with isopropyl alcohol, and an infrared (IR) spectrum was measured according to attenuated total reflectance measurement (ATR) using Fourier transform infrared spectroscopy (FT-IR) under the following conditions.

(Measurement Conditions)

Device: Perkin-Elmer, "Spectrum 2000 FT-IR"
Prism: Germanium 45° prism
Cumulated number: 16
Resolution: 4.0 cm$^{-1}$
Gain: 1

In the measured IR spectrum, the height of a peak at around 1730 cm$^{-1}$ from the base line to the peak top was defined as the intensity of an ester-derived peak (ester intensity); and the height of a peak at around 814 cm$^{-1}$ from the base line to the peak top was defined as the intensity of a melamine-derived peak (melamine intensity). The intensity ratio of the melamine peak to the ester peak was determined from the melamine intensity and ester intensity according to the following equation:

$$\text{(Intensity ratio of melamine to ester)} = \text{(Melamine intensity)}/\text{(Ester intensity)}$$

(2) Measurement of Bond Strength of Pressure-Sensitive Adhesive Sheet Using PET Film Substrate (Examples 1 to 4 and Comparative Examples 1 and 2)

Strip specimens each 25 mm wide were cut from the pressure-sensitive adhesive sheets prepared in Examples 1 to 4 and Comparative Examples 1 and 2 and subjected to measurements. The release films were removed from the specimens before the measurements.

The pressure-sensitive adhesive layer of each specimen pressure-sensitive adhesive sheet was affixed to a ply of the automotive coating without washing and another ply of the automotive coating after washing with isopropyl alcohol. The application was performed through one reciprocating movement of a 2-kg rubber roller (40 mm wide). The washing with isopropyl alcohol had been performed by rubbing the automotive coating with a cleaning cloth impregnated with isopropyl alcohol through ten reciprocating movements.

The resulting article was left stand at an ambient temperature of 23°C and relative humidity of 50% for 30 minutes and subjected to a peel test of the pressure-sensitive adhesive sheet at a peel angle of 180 degrees and a tensile speed of 300 mm per minute with a specimen width of 25 mm. In the peel test, peel force at peel distances (peel lengths) of from 10 to 50 mm was measured and averaged, and the averaged peel force was defined as the bond strength.

18

(3) Measurement of Bond Strength of Pressure-Sensitive Adhesive Sheet Having Bubble-Containing Viscoelastic Layer (Example 5 and Comparative Example 3)

Strip specimens each 25 mm wide were cut from the pressure-sensitive adhesive sheets prepared in Example 5 and Comparative Example 3 and subjected to measurements.
The pressure-sensitive adhesive layer of each specimen pressure-sensitive adhesive sheet was affixed to a ply of the automotive coating without washing and another ply of the automotive coating after washing with isopropyl alcohol. The affixation was performed through compression bonding by a one-way movement of a 5-kg rubber roller (40 mm wide). The washing with isopropyl alcohol had been performed by rubbing the automotive coating with a cleaning cloth impregnated with isopropyl alcohol through ten reciprocating movements.
The resulting article was left stand at an ambient temperature of 23°C and relative humidity of 50% for 30 minutes and subjected to a peel test of the pressure-sensitive adhesive sheet at a peel angle of 180 degrees and a tensile speed of 300 mm per minute on each specimen 25 mm wide. In the peel test, peel force was plotted to give a peel force curve, and a ten-point average of peaks at peel lengths of from 10 to 50 mm in the peel force curve was determined, and this was defined as the bond strength.
The "ten-point average of peaks at peel lengths of from 10 to 50 mm in the peel force curve" was determined by calculation in the following manner. Initially, a peel force curve (in the form of waves) was plotted based on data measured in the peel test; of peaks (hereinafter the term "peaks" refers to crests of plural waves) at peel lengths ranging from 10 to 50 mm (calculation range) in the peel force curve, the first and last peaks within the calculation range were excluded, and the highest peak was further excluded; and peak values at ten points in descending order from higher peel stress out of the residual peaks were averaged to give the "ten-point average of peaks at peel lengths of from 10 to 50 mm in peel force curve". If there were less than ten peaks in the calculation range, all the peak values were averaged.
Each measurement was repeated a total of three times (N=3), and the three measured values were averaged.

(4) Bond Factor

A bond factor (%) was determined according to the following equation from the bond strength to an unwashed automotive coating, and the bond strength to a washed automotive coating, as determined by the measurements of bond strength (2) and (3):

$$\text{Bond factor (\%)} = \text{(Bond strength to unwashed automotive coating)}/\text{(Bond strength to washed automotive coating)} \times 100$$

The bond factor indicates how much degree a bled surface conditioner of the automotive coating influences the bond strength. A higher bond factor approaching 100% indicates that the bond strength is less influenced by the bled surface conditioner of the automotive coating and is more stable.
The results in the tests (2) to (4) are shown in Table 2. In Table 2, the "unwashed automotive coating" is indicated as "unwashed coating", and the "washed automotive coating" is indicated as "washed coating".

[Table 2]

(TABLE 2)

| | Automotive coating (I) Acid-rain-resistant coating | | | Automotive coating (II) Acrylic/melamine coating | | |
|---|---|---|---|---|---|---|
| | Bond strength (N/25 mm) | | Bond factor (%) | Bond strength (N/25 mm) | | Bond factor (%) |
| | Unwashed coating | Washed coating | | Unwashed coating | Washed coating | |
| Example 1 | 9.8 | 13.9 | 70.5 | 14.2 | 15.1 | 93.7 |
| Example 2 | 9.0 | 12.2 | 73.4 | 13.0 | 13.6 | 95.6 |
| Example 3 | 11.7 | 13.6 | 86.0 | 10.0 | 13.8 | 72.5 |

(continued)

| | Automotive coating (I) Acid-rain-resistant coating | | | Automotive coating (II) Acrylic/melamine coating | | |
|---|---|---|---|---|---|---|
| | Bond strength (N/25 mm) | | Bond factor (%) | Bond strength (N/25 mm) | | Bond factor (%) |
| | Unwashed coating | Washed coating | | Unwashed coating | Washed coating | |
| Example 4 | 10.9 | 11.6 | 93.5 | 9.8 | 12.5 | 78.4 |
| Example 5 | 19.0 | 27.0 | 70.3 | 35.0 | 49.0 | 71.4 |
| Comparative Example 1 | 7.8 | 14.2 | 54.9 | 12.6 | 13.7 | 92.0 |
| Comparative Example 2 | 8.0 | 13.4 | 59.7 | 10.9 | 12.0 | 90.8 |
| Comparative Example 3 | 13.0 | 24.0 | 54.2 | 29.0 | 45.0 | 64.4 |

Comparisons between Examples 1, 2 and Comparative Examples 1, 2, and comparisons between Example 5 and Comparative Example 3 demonstrate that the pressure-sensitive adhesive sheets according to the present invention exhibit high bond strengths to surfaces of coatings which surfaces containing surface conditioners (unwashed coatings), whereas such surface-conditioner-bearing surfaces of coatings are hard to adhere according to known techniques. The pressure-sensitive adhesive sheets according to the present invention also have high bond factors, show satisfactory adhesive properties even to surface-conditioner-bearing surfaces of coatings with being less influenced by the surface conditioner, and exhibit superior adhesive performance particularly to unwashed, surface-conditioner-bearing acid-rain-resistant coatings (automotive coating (I)).
The data of the pressure-sensitive adhesive sheets according to Examples 3 and 4 demonstrate that the use of a basic monomer exhibits particularly high effects on acid-rain-resistant coatings.

Industrial Applicability

The pressure-sensitive adhesive sheets according to the present invention show high bond strengths even to automotive coatings (vehicle coatings) containing large amounts of surface conditioners and bearing the surface conditioners on their surfaces without suffering from reduction in bond strength caused by the surface conditioners. Among such coatings, they can exhibit high bond strengths even to hard-to-adhere coatings, such as acid-rain-resistant coatings, and thereby exhibit superior protecting properties without suffering from troubles such as delamination of the pressure-sensitive adhesive sheets during use. They are therefore industrially useful as pressure-sensitive adhesive sheets to be applied to vehicle coatings, such as pressure-sensitive adhesive sheets for the protection or decoration of automotive coatings, and pressure-sensitive adhesive sheets for the bonding typically of automobiles exterior components, automotive body protecting components, or automotive decorating components to automotive coatings.

**Claims**

1. A pressure-sensitive adhesive sheet for the application to a surface of a vehicle coating, the surface containing a surface conditioner, the pressure-sensitive adhesive sheet comprising an acrylic pressure-sensitive adhesive layer (Y) as a pressure-sensitive adhesive layer to be in contact with the surface of the vehicle coating, the acrylic pressure-sensitive adhesive layer (Y) having been polymerized from an acrylic pressure-sensitive adhesive composition through the application of an active energy ray, the acrylic pressure-sensitive adhesive composition including a vinyl monomer mainly containing an alkyl (meth)acrylate (a1) whose alkyl moiety having from 2 to 14 carbon atoms, or a prepolymer of the vinyl monomer(a); a polymerization initiator (b) activatable by the action of an active energy ray; a multifunctional (meth)acrylate (c); and a (meth)acrylate oligomer (d), the (meth)acrylate oligomer (d) having a weight-average molecular weight of from 1000 to 30000 and containing 1 to 50 parts by weight of a rosin-modified (meth)acrylate (d1) per 100 parts by weight of total monomer components constituting the (meth)acrylate oligomer (d).

2. The pressure-sensitive adhesive sheet for the application to a vehicle coating, according to claim 1, wherein the pressure-sensitive adhesive sheet further comprises a viscoelastic layer (X) containing hollow microspheres.

**3.** The pressure-sensitive adhesive sheet for the application to a vehicle coating, according to one of claims 1 and 2, wherein the acrylic pressure-sensitive adhesive composition contains 0.001 to 5 parts by weight of the polymerization initiator (b) activatable by the action of an active energy ray; 0.001 to 10 parts by weight of the multifunctional (meth) acrylate (c); and 2 to 40 parts by weight of the (meth)acrylate oligomer (d), per 100 parts by weight of the vinyl monomer, or prepolymer thereof (a).

**4.** The pressure-sensitive adhesive sheet for the application to a vehicle coating, according to any one of claims 1 to 3, wherein the vinyl monomer, or prepolymer thereof (a) gives a polymer having a glass transition temperature (Tg) of from -70°C to -30°C.

**5.** The pressure-sensitive adhesive sheet for the application to a vehicle coating, according to any one of claims 1 to 4, wherein the (meth)acrylate oligomer (d) contains a (meth)acrylic ester as an another monomer component (d2) than the rosin-modified (meth)acrylate (d1), and wherein the (meth)acrylic ester as the monomer component (d2) gives a homopolymer having a glass transition temperature (Tg) of 40°C or higher.

**6.** The pressure-sensitive adhesive sheet for the application to a vehicle coating, according to claim 5, wherein the (meth)acrylic ester which gives a homopolymer having a glass transition temperature (Tg) of 40°C or higher is at least one selected from the group consisting of cyclohexyl methacrylate, isobornyl methacrylate, and t-butyl methacrylate.

**7.** The pressure-sensitive adhesive sheet for the application to a vehicle coating, according to claim 2, wherein the viscoelastic layer (X) containing hollow microspheres further contains bubbles.

## INTERNATIONAL SEARCH REPORT

| International application No. |
|---|
| PCT/JP2008/060883 |

**A. CLASSIFICATION OF SUBJECT MATTER**
C09J7/00(2006.01)i, B60R13/04(2006.01)i, C09J4/02(2006.01)i, C09J133/08 (2006.01)i

According to International Patent Classification (IPC) or to both national classification and IPC

**B. FIELDS SEARCHED**

Minimum documentation searched (classification system followed by classification symbols)
C09J1/00-201/10

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-3796 A (Nitto Denko Corp.), 09 January, 2002 (09.01.02), (Family: none) | 1-7 |
| A | JP 4-114079 A (Nitto Denko Corp.), 15 April, 1992 (15.04.92), (Family: none) | 1-7 |
| A | JP 8-12727 A (Shin-Nakamura Chemical Co., Ltd.), 16 January, 1996 (16.01.96), (Family: none) | 1-7 |
| A | JP 8-333550 A (New Oji Paper Co., Ltd.), 17 December, 1996 (17.12.96), (Family: none) | 1-7 |

☐ Further documents are listed in the continuation of Box C.    ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 27 June, 2008 (27.06.08) | 08 July, 2008 (08.07.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001049200 A
- JP 2000248241 A
- JP 2002066206 A
- JP 2003226834 A
- JP H061994108001 A